# EUROPÄISCHE PATENTSCHRIFT

(11) **EP 2 545 623 B1**
(45) Veröffentlichungstag und Bekanntmachung des Hinweises auf die Patenterteilung: **26.08.2015**
(21) Anmeldenummer: 11706165.5
(22) Anmeldetag: 17.02.2011
(51) Int. Cl.: H02G 3/06, H01R 13/56

(54) **KABELVERSCHRAUBUNG MIT KLEMMEINRICHTUNG FÜR EINE ARMIERUNG DES KABELS**
CABLE GLAND WITH CLAMPING MEANS FOR THE ARMOUR OF A CABLE
PRESSE-ÉTOUPE AVEC DES MOYENS DE SERRAGE DU BLINDAGE D'UN CÂBLE

(30) Priorität: 31.03.2010 DE 202010004425 U
(43) Veröffentlichungstag der Anmeldung: 16.01.2013
(73) Patentinhaber: HUMMEL AG, 79211 Denzlingen (DE)
(72) Erfinder: BARTHOLOMÄ, Mario, 79297 Winden (DE); ZÜGEL, Fritz, 79183 Waldkirch (DE); GÖTZ, Volker, 79341 Kenzingen (DE); HOCH, Achim, 79183 Waldkirch (DE)
(74) Vertreter: Kunst, Manuel Nikolaus Johannes
(86) Internationale Anmeldenummer: PCT/EP2011/000764
(87) Internationale Veröffentlichungsnummer: WO 2011/120609

(56) Entgegenhaltungen:
- EP-A1- 0 580 288
- GB-A- 2 208 335
- GB-A- 2 247 996
- US-A1- 2008 236 861

## Beschreibung

Die Erfindung betrifft eine Kabelverschraubung mit einer in eine Wandung oder eine Rohrkupplung einsetzbaren Schraubhülse, mit einer mit dieser Schraubhülse zusammenwirkenden Überwurfmutter, mit einem von der Überwurfmutter beaufschlagten und durch das Anziehen der Überwurfmutter gegen ein zu haltendes Kabel andrückbaren Klemmeinsatz, wobei das Kabel eine Armierung aufweist und in der Kabelverschraubung eine Klemmeinrichtung zum Einklemmen eines Teils der Armierung vorgesehen ist, welche Klemmeinrichtung in Gebrauchsstellung teilweise in axialer Richtung in die Schraubhülse eingreift und von der Überwurfmutter außerhalb der Schraubhülse beaufschlagt ist, wobei der in die Schraubhülse eingreifende Teil der Klemmeinrichtung in Gebrauchsstellung an der Innenseite der Schraubhülse in Drehrichtung formschlüssig angreift und die Schraubhülse im Eingriffsbereich der Klemmeinrichtung und diese Klemmeinrichtung als gegenseitige Drehsicherung einen zusammenpassenden unrunden Querschnitt haben.

Eine derartige Kabelverschraubung ist aus der GB 2 208 335 A bekannt. Dabei wird durch einen sechseckigen Querschnitt im gegenseitigen Eingriffsbereich von Schraubhülse und Klemmeinrichtung verhindert, dass beim Anziehen der Überwurfmutter das Kabel und seine Armierung in Drehrichtung mitgenommen werden. Beim Lösen der Überwurfmutter besteht jedoch die Gefahr, dass diese Klemmeinrichtung mitgelöst wird.

Es besteht deshalb die Aufgabe, eine Kabelverschraubung der eingangs definierten Art zu schaffen, bei welcher das Verdrehen des Kabels während seines Verklemmens und das Einklemmen seiner Armierung, beim Lösen der Überwurfmutter aber auch das Lösen der Klemmeinrichtung vermieden werden können.

Diese Aufgabe wird mit den Mitteln des Patentanspruchs 1 gelöst.

Für die Festlegung der Klemmeinrichtung mit ihrem unrunden Bereich in der Überwurfmutter wird vorgesehen, dass die Klemmeinrichtung in ihrem Eingriffsbereich eine umlaufende Nut mit einem darin eingreifenden und radial überstehenden Haltering oder O-Ring und die Schraubhülse an ihrer der Überwurfmutter zugewandten Öffnung eine Hinterschneidung aufweist, die den Haltering oder O-Ring in Gebrauchsstellung übergreift.

Dies ergibt zusätzlich zu dem Formschluss in Drehrichtung, der ein erheblich höheres Drehmoment gegen eine Verdrehung ergibt, als es beim Anziehen der Überwurfmutter an dem Kabel auftreten kann, eine zusätzliche axiale Festlegung der Klemmeinrichtung beispielsweise beim Lösen der Überwurfmutter, wodurch vermieden werden kann, dass die Klemmeinrichtung mit gelöst wird. Vielmehr bleibt sie beim Lösen der Überwurfmutter mit Hilfe des Halteringes an der Schraubhülse festgelegt, wobei der Haltering je nach Abmessung auch zur Verdrehsicherung beitragen kann. Gegebenenfalls könnte dabei die Hinterschneidung auch durch eine an der Schraubhülse innenseitig angeordnete Ringnut gebildet sein, die in Gebrauchsstellung den radialen Überstand des Halte- oder O-Rings aufnimmt.

Besonders günstig ist es dabei, wenn der in Drehrichtung wirkende Formschluss in axialer Richtung als Schiebe- oder Klemmsitz ausgebildet ist. Die Klemmeinrichtung kann also auf einfache Weise mit ihrem formschlüssigen Bereich in das dazu passende Gegenstück der Schraubhülse eingeschoben oder eingesteckt werden, ohne dass es zusätzlicher Maßnahmen zur Schaffung eines Formschlusses in Drehrichtung bedarf. Dabei könnte zwar eine konische Ausbildung dieser zusammenschiebbaren Teile vorgesehen sein, jedoch ist es für die Herstellung und auch die Montage vorteilhaft, wenn die in Drehrichtung formschlüssig zusammenpassenden Flächen der zusammensteckbaren Teile parallel zur Längsmittelachse der Kabelverschraubung orientiert sind.

Der unrunde Querschnitt kann auf verschiedene Weise realisiert sein. Beispielsweise kann er an der Schraubhülse und an der Klemmeinrichtung ein bereichsweise abgeflachter, im Übrigen kreisrunder, ein elliptischer oder ovaler oder ein profilierter oder ein mehrkantiger oder ein mit zu einer oder mehreren Gegennuten passende Vorsprünge aufweisender Querschnitt sein oder es kann zwischen Schraubhülse und Klemmeinrichtung eine Nut- und Federverbindung vorgesehen sein.

Besonders zweckmäßig ist es, wenn der unrunde Querschnitt zur in Drehrichtung formschlüssigen und in axialer Richtung steckbaren Kupplung der Schraubhülse und der Klemmeinrichtung ein Sechskant, Siebenkant, Achtkant oder Zehnkant ist. Zwar wäre sogar ein Dreikant, Vierkant oder Fünfkant möglich, jedoch ergibt sich eine umso geringere Wandstärke vor allem an der Schraubhülse, je höher die Zahl der Kanten des unrunden Querschnittes ist. Entsprechend gering kann der Außenquerschnitt der Schraubhülse im Bereich dieser Steckverbindung sein.

Eine zweckmäßige und vorteilhafte Ausgestaltung der Erfindung zur Verbesserung der Fixierung des zu der Kabelverschraubung gehörenden Kabels kann darin bestehen, dass die in Gebrauchsstellung in der Schraubhülse befindliche Stirnseite der Klemmeinrichtung einen in der Schraubhülse angeordneten zweiten Klemmeinsatz und/oder eine Dichtung über eine Schrägfläche derart beaufschlagt, dass bei axialer Verstellung der Klemmeinrichtung der zweite Klemmeinsatz und/oder die Dichtung an das Kabel, insbesondere an einen abisolierten Bereich des Kabels, andrückbar ist. Neben einem ersten bevorzugt an den nicht ababisolierten Bereich des Kabels andrückbaren Klemmeinsatz kann also mit Hilfe der Klemmeinrichtung ein zweiter Klemmeinsatz beaufschlagt werden, so dass die Klemmeinrichtung eine Doppelfunktion erhält, indem sie einerseits die Armierung des Kabels erfassen und andererseits zur noch besseren Verklemmung des Kabels über einen zweiten Klemmeinsatz und/oder eine Dichtung beitragen kann. Dabei kann die Stirnseite der Klemmeinrichtung selbst die entsprechende Schrägfläche oder den Hohlkonus aufweisen oder einen derart geformten Druckring beaufschlagen.

Die Klemmeinrichtung kann zweiteilig sein und einen Klemmkörper mit einem der Überwurfmutter zugewandten Konusbereich und einen auf diesem Konusbereich axialen Klemmring aufweisen, wobei in Gebrauchsstellung zwischen Konusbereich und Klemmring Teile der Armierung, beispielsweise Armierungsdrähte oder eine Armierungsfolie, eingespannt oder eingeklemmt sein können. Die Klemmeinrichtung kann also etwa derjenigen entsprechen, die aus DE 20 2005 014 138 U1 oder auch aus DE 692 18 853 T2 bekannt ist, was den eigentlichen Klemmbereich betrifft.

Eine weitere Ausgestaltung der Erfindung kann in Anlehnung an DE 20 2005 014 138 U1 darin bestehen, dass die Überwurfmutter aufgeteilt ist und eine erste Überwurfmutter zum Festlegen der Klemmeinrichtung und die koaxial dazu angeordnete zweite Überwurfmutter zum Beaufschlagen des ersten Klemmeinsatzes und/oder einer Dichtung dient, wobei die erste Überwurfmutter ein ihrem Innengewindebereich abgewandtes Außengewinde und die zweite Überwurfmutter ein dazu passendes Innengewinde hat. Die erste Überwurfmutter kann also in ihrem der Schraubhülse zugewandten Bereich das übliche Innengewinde zum Zusammenwirken mit dem Außengewinde der Schraubhülse haben und in axialer Richtung dazu beabstandet ihrerseits ein Außengewinde für den Angriff des Innengewindes der zusätzlichen Überwurfmutter haben. Somit können Aufbau und Wirkungsweise der Kabelverschraubung gemäß DE 20 2005 014 138 U1 entsprechen.

Günstig ist es dabei, wenn ein Vorsprung der ersten oder der einzigen Überwurfmutter in Gebrauchsstellung die Klemmeinrichtung in axialer Richtung im Sinne der Klemmwirkung, insbesondere den Druckring, axial beaufschlagt, wie dies ebenfalls aus DE 20 2005 014 138 U1 oder aus DE 692 18 853 T2 bekannt ist. Durch das Anziehen der Überwurfmutter wird dann nicht nur die Klemmwirkung der Klemmeinrichtung selbst bewirkt, sondern diese auch axial beaufschlagt, um einen mit ihr zusätzlich zusammenwirkenden Klemmeinsatz an dem Kabel wirksam zu machen.

Vorteilhaft ist es, wenn der Haltering oder O-Ring ein elastischer Haltering oder O-Ring ist. Dies erleichtert das Zusammenfügen.
Die Hinterschneidung kann den Halte- oder O-Ring in Gebrauchsstellung mit axialem Abstand übergreifen.

Besonders günstig ist es, wenn die Hinterschneidung den unrunden Einsteckbereich der Schraubhülse begrenzt. Bei einer derartigen Anordnung ist also in axialer Richtung eine Begrenzung des unrunden Querschnitts der Schraubhülse durch eine Hinterschneidung vorgesehen, das heißt die axiale Abmessung des unrunden Bereichs der Schraubhülse ist kürzer als der unrunde Bereich des Klemmkörpers der Klemmeinrichtung. Beim Zusammenfügen des Klemmkörpers und der Schraubhülse kann der elastische Haltering oder O-Ring zunächst etwas nachgeben, bis die in Drehrichtung formschlüssig zusammenpassenden unrunden Bereiche ihre Gebrauchsstellung erlangt haben, wodurch sich dann der Halte- oder O-Ring in wieder entspannter Lage in axialer Richtung hinter der Hinterschneidung der Schraubhülse befindet und diese Steckverbindung von Klemmeinrichtung und Schraubhülse in axialer Richtung sichert.

Vor allem bei Kombination einzelner oder mehrerer der vorbeschriebenen Merkmale und Maßnahmen ergibt sich eine Kabelverschraubung mit einem durch eine Überwurfmutter betätigbaren Druckstück an der Klemmeinrichtung, womit dieses als Klemmring ausgebildete Druckstück die Kabelarmierung festklemmen und außerdem gleichzeitig die gesamte Klemmeinrichtung axial festlegen und gegebenenfalls gegen einen Klemmeinsatz andrücken kann, wobei diese Klemmeinrichtung gegen ein Mitdrehen beim Anziehen einer oder zweier Überwurfmuttern durch einen Formschluss an ihrem Eingriff in die Schraubhülse gesichert ist.

Nachstehend sind Ausführungsbeispiele der Erfindung anhand der Zeichnung näher beschrieben. Es zeigt in zum Teil schematisierter Darstellung:
- Fig. 1: eine perspektivische Ansicht einer erfindungsgemäßen Kabelverschraubung in auseinandergezogener Form beziehungsweise kurz vor ihrer Montage, wobei die Armierung des teilweise abisolierten Kabels noch nicht mit der dazugehörigen Klemmeinrichtung verbunden und diese Klemmeinrichtung noch nicht in die zugehörige Schraubhülse mit ihrem mehrkantförmigen Bereich drehfest eingesetzt ist,
- Fig. 2: in vergrößertem Maßstab die durch den strichpunktierten Kreis in Fig. 1 markierte Einzelheit mit dem mehrkantförmigen Teil der Klemmeinrichtung vor ihrem Einsatz in die Schraubhülse,
- Fig. 3: eine zur Hälfte in Ansicht und zur anderen Hälfte im Längsschnitt gehaltene Darstellung der Kabelverschraubung gemäß Fig. 1 vor ihrer endgültigen Montage beziehungsweise in Explosionsdarstellung,
- Fig. 4: zur Hälfte die Ansicht und zur anderen Hälfte den Längsschnitt der Kabelverschraubung gemäß den Fig. 1 bis 3 in Montagestellung mit dem Kabel und dessen Armierung in Klemmposition,
- Fig. 5: eine der Fig. 4 entsprechende Darstellung, bei welcher eine einzige Überwurfmutter für die Beaufschlagung sowohl eines Klemmeinsatzes als auch der Klemmeinrichtung vorgesehen ist, welche Klemmeinrichtung ihrerseits wie in Fig. 1 bis 4 einen zweiten Klemmeinsatz beaufschlagt,
- Fig. 6: einen Querschnitt der Kabelverschraubung im Bereich des drehfesten Eingriffs der Klemmeinrichtung in die Schraubhülse und zwar ohne Darstellung des Kabels, des Klemmeinsatzes und der Überwurfmutter, wobei die Klemmeinrichtung in ihrem Eingriffsbereich einen achteckigen Querschnitt hat, der in einen entsprechenden Hohlquerschnitt der Schraubhülse formschlüssig passt,
- Fig. 7: eine der Fig. 6 entsprechende Darstellung, wobei ein unrunder Querschnitt an dem in die Schraubhülse eingreifenden Teil der Klemmeinrichtung durch zwei Abflachungen eines im Übrigen kreisrunden Querschnitts gebildet ist,
- Fig. 8: eine der Darstellung der Fig. 6 und 7 entsprechende Ausführungsform, bei welcher der unrunde Querschnitt oval oder ellipsenförmig ist, sowie
- Fig. 9: eine den Fig. 6 bis 8 entsprechende Darstellung, wobei der unrunde Querschnitt durch an einem kreisrunden Querschnitt radial angeordnete Vorsprünge und dazu passende Gegennuten gebildet ist.

Bei der nachfolgenden Beschreibung der Ausführungsbeispiele erhalten hinsichtlich ihrer Funktion übereinstimmende Teile auch bei abgewandelter Formgebung oder Ausführung übereinstimmende Bezugszahlen.

Eine im Ganzen mit 1 bezeichnete Kabelverschraubung weist eine in eine Wandung oder eine Rohrkupplung oder dergleichen einsetzbare Schraubhülse 2, zumindest eine mit dieser Schraubhülse 2 zusammenwirkende Überwurfmutter 3 und einen ersten von der Überwurfmutter beaufschlagten und durch das Anziehen der Überwurfmutter 3 gegen ein zu haltendes Kabel 4 andrückbaren Klemmeinsatz 5 sowie einen zweiten Klemmeinsatz 6 auf, wobei das Kabel 4 eine in den Figuren teilweise abisoliert dargestellte Armierung 7 aufweist und innerhalb der Kabelverschraubung 1 eine im Ganzen mit 8 bezeichnete Klemmeinrichtung zum Einklemmen eines abisolierten Teils der Armierung 7 vorgesehen ist. In Gebrauchsstellung greift diese Klemmeinrichtung 8 teilweise in axialer Richtung in die der Überwurfmutter zugewandte offene Seite der Schraubhülse 2 ein und wird von der Überwurfmutter 3 außerhalb der Schraubhülse 2 in axialer und klemmender Richtung beaufschlagt.

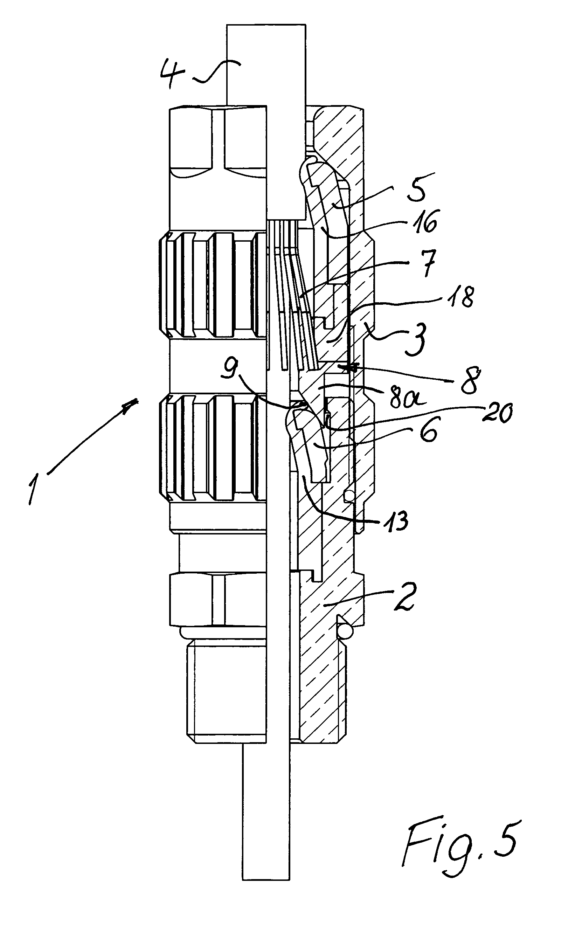

In beiden Ausführungsbeispielen sind dabei zwei unterschiedlich bemessene Klemmeinsätze, nämlich der größer bemessene erste Klemmeinsatz 5 und der noch zu erläuternde zweite kleiner bemessene Klemmeinsatz 6 vorgesehen, wobei der erste größere Klemmeinsatz 5 durch eine Überwurfmutter 10 und der kleiner bemessene zweite Klemmeinsatz 6 durch die Überwurfmutter 3 beaufschlagt werden, während im Ausführungsbeispiel nach Fig. 5 eine gemeinsame Überwurfmutter 3 an der Schraubhülse 2 angreift und beide Klemmeinsätze 5 und 6 bei ihrer Anzugsbewegung beaufschlagt und verklemmt.

Damit beim Betätigen der Überwurfmutter 3 die Klemmeinrichtung 8 nicht mitgedreht werden kann und also verhindert wird, dass die Armierung 7 und/oder das Kabel 4 mitgedreht werden, ist der in die Schraubhülse stirnseitig angreifende Teil 8a der Klemmeinrichtung 8 und die von ihm in Gebrauchsstellung beaufschlagte Innenseite der Schraubhülse 2 derartig ausgebildet, dass in Montagestellung in Drehrichtung Formschluss besteht.

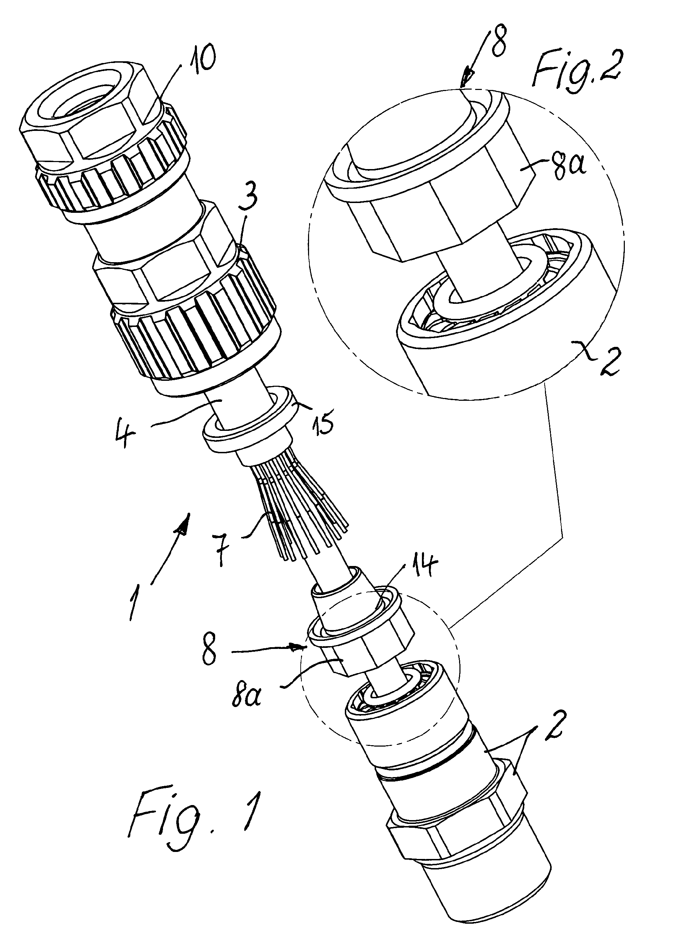

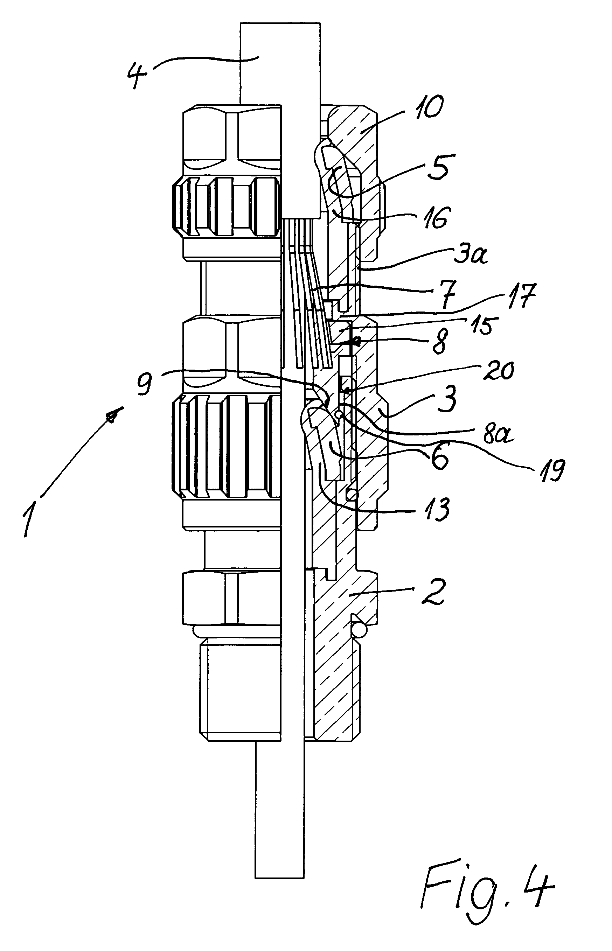

Dieser in Drehrichtung wirkende Formschluss ist hingegen in axialer Richtung als Schiebesitz ausgebildet, das heißt, die Klemmeinrichtung 8 und insbesondere der in die Schraubhülse 2 in Gebrauchsstellung eingreifende Teil 8a kann einfach aus der in Fig. 1 und 2 erkennbaren Lage in die in Fig. 4 und 5 gezeigte Position axial eingeschoben werden, um dann nicht mehr relativ zu der Schraubhülse 2 verdreht werden zu können.

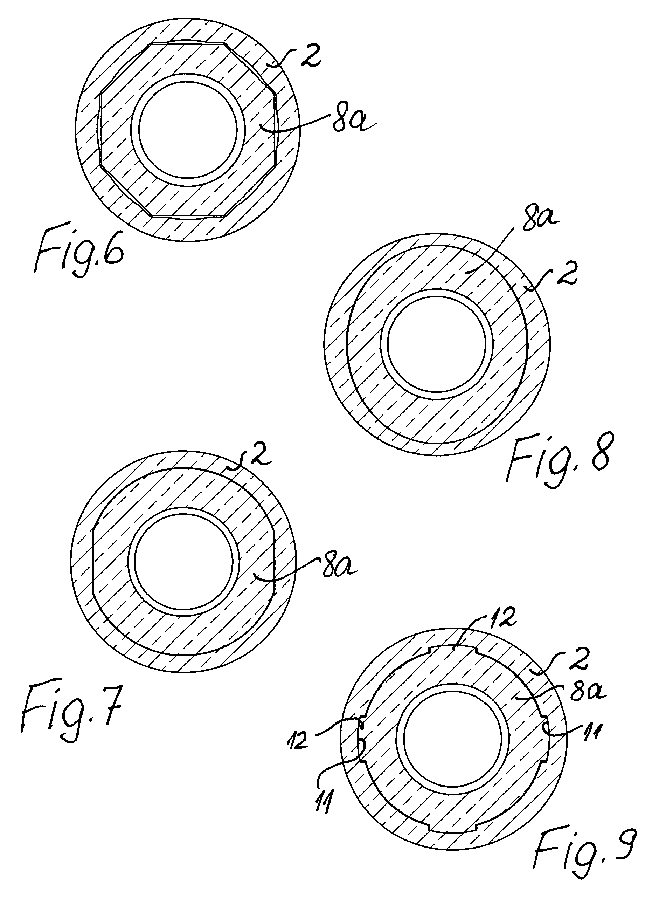

Dabei erkennt man besonders gut in Fig. 1 und 2 sowie vor allem auch in den Fig. 6 bis 9, dass die Schraubhülse 2 im Eingriffsbereich der Klemmeinrichtung 8 und ihres Teiles 8a und diese Klemmeinrichtung 8 selbst an ihrem Teil 8a als gegenseitige Drehsicherung einen zusammenpassenden unrunden Querschnitt haben.

Fig. 7 zeigt dabei, dass der unrunde Querschnitt an der Schraubhülse 2 und an der Klemmeinrichtung 8 ein bereichsweise abgeflachter, im Ausführungsbeispiel zweimal abgeflachter, im Übrigen kreisrunder Querschnitt sein kann.

Fig. 8 zeigt als unrunden Querschnitt zwischen Schraubhülse 2 und Klemmeinrichtung 8 einen elliptischen oder ovalen Querschnitt. In Fig. 9 ist eine Profilierung der zusammenpassenden und in Drehrichtung festliegenden Querschnitte vorgesehen, wobei ein zu Gegennuten 11 an der Schraubhülse 2 passender Querschnitt mit Vorsprüngen 12 dargestellt ist. In analoger Weise könnte auch eine Nut- oder Federverbindung vorgesehen sein, jedoch haben die dargestellten Querschnitte den Vorteil, kein zusätzliches Federteil zu benötigen.

In Fig. 6 ist eine bevorzugte Ausführungsform dargestellt, bei welcher der unrunde Querschnitt zur in Drehrichtung formschlüssigen Kupplung der Schraubhülse 2 und der Klemmeinrichtung 8 beziehungsweise ihres in die Schraubhülse 2 eingreifenden Teils 8a ein Achtkant ist, der aber auch ein Sechskant, Siebenkant oder gar Zehnkant sein könnte. Je mehr Kanten vorgesehen sind, umso dünnerwandig kann die Schraubhülse 2 im Bereich dieser formschlüssigen Kupplung sein, das heißt umso geringer kann die Außenabmessung der Schraubhülse 2 im Kupplungsbereich sein.

Gegebenenfalls könnten auch so viele Kanten oder eine derartige Profilierung miteinander in Eingriff sein, dass man von einer Verzahnung sprechen könnte.

In beiden Ausführungsbeispielen ist vorgesehen, dass die in Gebrauchsstellung in der Schraubhülse 2 befindliche Stirnseite der Klemmeinrichtung 8 beziehungsweise des in die Schraubhülse 2 eingreifenden Teils 8a der Klemmeinrichtung 8 den in der Schraubhülse 2 angeordneten zweiten Klemmeinsatz 6 und eine Dichtung 13 derart beaufschlagt, dass bei axialer Verstellung der Klemmeinrichtung 8 durch die Überwurfmutter 3 der zweite Klemmeinsatz 6 und die Dichtung 13 an das Kabel 4 an einen abisolierten Bereich andrückbar ist und gemäß Fig. 4 und 5 angedrückt wird. Es sei erwähnt, dass die Kabelverschraubung 1 aber auch in analoger Weise funktionieren könnte, wenn der zweite Klemmeinsatz 6 und/oder eine Dichtung 13 nicht vorhanden wären. Wichtig ist lediglich, dass die Klemmeinrichtung 8 in axialer Richtung ein Widerlager findet, damit sie ihre Klemmfunktion ausüben kann, wobei in den Ausführungsbeispielen der zweite Klemmeinsatz 6 dieses Widerlager ist.

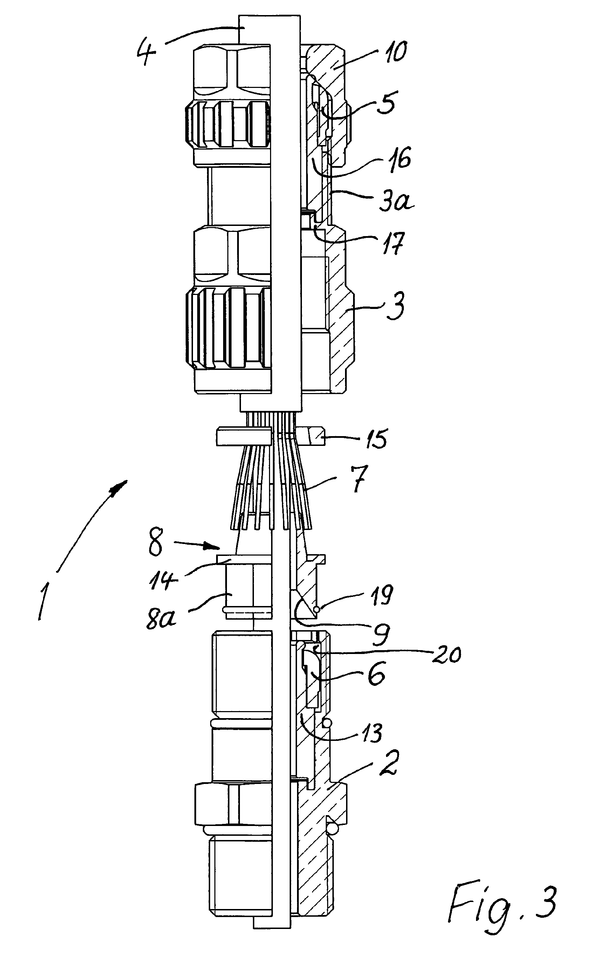

Vor allem in den Fig. 1 und 3 aber bei gemeinsamer Betrachtung auch in den Fig. 4 sowie 5 erkennt man, dass die Klemmeinrichtung 8 zweiteilig ist und einen den Teil 8a aufweisenden Klemmkörper 14 mit einem der Überwurfmutter 3 zugewandten Konusbereich und einen auf diesem Konusbereich des Klemmkörpers 14 axial verstellbaren Klemmring 15 mit Innenkonus aufweist, wie es aus DE 20 2005 014 138 U1 bekannt ist. Dabei sind in Gebrauchsstellung zwischen dem Konusbereich und dem Klemmring 15 Teile der Armierung 7, beispielsweise Armierungsdrähte oder gegebenenfalls auch eine Armierungsfolie, eingespannt oder eingeklemmt, wenn die Kabelverschraubung 1 montiert ist. In aus DE 20 2005 014 138 U1 bekannter Weise wird durch das Anziehen der Überwurfmutter 3 die Klemmeinrichtung 8 beaufschlagt und der Klemmring 15 gegen den konischen Bereich des Klemmkörpers 14 gedrückt, wodurch die dazwischenliegenden Armierungsdrähte kontaktiert und festgelegt werden. Gleichzeitig wird die Klemmeinrichtung 8 in axialer Richtung festgelegt und gegen den zweiten Klemmeinsatz 6 gedrückt, so dass die schräge oder konische Stirnseite 9 des Teils 8a den Klemmeinsatz 6 in der in den Fig. 4 und 5 dargestellten Weise radial nach innen gegen das Kabel 4 drückt.

Im Ausführungsbeispiel gemäß den Fig. 1 bis 4 ist die Überwurfmutter aufgeteilt und die erste Überwurfmutter 3, die in Gebrauchsstellung der Schraubhülse 2 näher liegt, dient zum Festlegen der Klemmeinrichtung 8, während die koaxial dazu angeordnete zweite Überwurfmutter 10 zum Beaufschlagen des ersten Klemmeinsatzes 5 und einer dort befindlichen Dichtung 16 dient. Die erste Überwurfmutter 3 hat dabei in ihrem die Überwurfmutter 2 übergreifenden Bereich ein Innengewinde, welches zu dem Außengewinde der Schraubhülse 2 passt, während sie außerdem an ihrem entgegengesetzten Endbereich ein Außengewinde 3a hat, zu welchem ein Innengewinde der zweiten Überwurfmutter 10 passt, so dass die beiden Überwurfmuttern 3 und 10 in der in Fig. 4 dargestellten Weise zusammengeschraubt werden können, um ihre jeweilige Wirkung auszuüben.

Dabei hat im Ausführungsbeispiel gemäß Fig. 1 bis 4 die erste Überwurfmutter 3 einen in axialer Richtung im Sinne der Klemmwirkung wirkenden Druckring 17, der einstückig mit ihr verbunden ist.

Im Ausführungsbeispiel gemäß Fig. 5 ist hingegen ein separater Druckring 18 vorgesehen, der von der gemeinsamen Überwurfmutter 3 über den Klemmeinsatz 5 axial beaufschlagt wird, um die Klemmeinrichtung 8 zu betätigen.

In den Fig. 3 und 4 ist dabei eine Möglichkeit dargestellt, die Klemmeinrichtung 8 in ihrer Gebrauchsstellung in axialer Richtung zu sichern, so dass sie beim Lösen der Überwurfmutter 3 nicht ungewollt aus der Schraubhülse 2 wieder herausfallen kann. Dazu ist vorgesehen, dass die Klemmeinrichtung 8 in ihrem Eingriffsbereich eine umlaufende Nut mit einem darin eingreifenden und radial überstehenden, bevorzugt elastischen Haltering oder O-Ring 19 und die Schraubhülse 2 an ihrer der Überwurfmutter 3 zugewandten Öffnung eine Hinterschneidung 20 aufweist, die den Halte- oder O-Ring 19 in Gebrauchsstellung gemäß Fig. 4 mit axialem Abstand übergreift. Die Hinterschneidung 20 ist dabei dadurch gebildet, dass in axialer Richtung benachbart zu dem unrunden Bereich der Überwurfmutter 3 eine Querschnittserweiterung vorgesehen ist, die gegenüber dem unrunden Querschnitt der Schraubhülse 2 in radialer Richtung etwas zurückspringt. Die Hinterschneidung 20 begrenzt also den unrunden Einsteckbereich der Schraubhülse 3 innenseitig, so dass der Halte- oder O-Ring 19 in Einsteckrichtung hinter dieser Hinterschneidung 20 seine in radialer Richtung entspannte Lage einnimmt, wie es in Fig. 4 dargestellt ist.

In den Darstellungen gemäß den Fig. 1 und 5 ist die Kabelverschraubung ohne den Halte- oder O-Ring 19 gezeigt.

Die Kabelverschraubung 1 weist eine in eine Wandung oder eine Rohrkupplung einsetzbare Schraubhülse 2 mit einem Außengewinde und eine mit diesem Außengewinde der Schraubhülse 2 zusammenwirkende Überwurfmutter 3 auf. Mit Hilfe der Überwurfmutter 3 kann durch deren Anziehen ein Klemmeinsatz 5 gegen ein zu haltendes Kabel 4 angedrückt werden, wobei das Kabel 4 eine Armierung 7 aufweist, die innerhalb der Kabelverschraubung 1 zumindest stellenweise freigelegt ist oder frei liegt. In der Kabelverschraubung 1 ist eine Klemmeinrichtung 8 zum Einklemmen eines Teils dieser Armierung 7 vorgesehen, welche Klemmeinrichtung 8 in Gebrauchsstellung teilweise in axialer Richtung in die Innenöffnung der Schraubhülse 2 eingreift und von der Überwurfmutter 3 außerhalb der Schraubhülse 2 direkt oder indirekt beaufschlagt wird. Zur Verhinderung einer Verdrehung des Kabels 4 und/oder der Klemmeinrichtung 8 beim Anziehen der Überwurfmutter 3 ist der in die Schraubhülse 2 eingreifende Teil 8a der Klemmeinrichtung 8 in Gebrauchsstellung an der Innenseite der Schraubhülse 2 in Drehrichtung formschlüssig festgelegt und hat beispielsweise einen mehrkantförmigen Querschnitt. Dabei kann die Klemmeinrichtung 8 mit ihrer in die Schraubhülse 2 eingreifenden Stirnseite 9 einen zweiten Klemmeinsatz 6 beaufschlagen.

## Patentansprüche

1. Kabelverschraubung (1) mit einer in eine Wandung oder eine Rohrkupplung einsetzbaren Schraubhülse (2), mit einer mit dieser Schraubhülse (2) zusammenwirkenden Überwurfmutter (3), mit einem von der Überwurfmutter (3) beaufschlagten und durch das Anziehen der Überwurfmutter (3) gegen ein zu haltendes Kabel (4) andrückbaren Klemmeinsatz (5,6), wobei das Kabel (4) eine Armierung (7) aufweist und in der Kabelverschraubung (1) eine Klemmeinrichtung (8) zum Einklemmen eines Teils der Armierung (7) vorgesehen ist, welche Klemmeinrichtung (8) in Gebrauchsstellung teilweise in axialer Richtung in die Schraubhülse (2) eingreift und von der Überwurfmutter (3) außerhalb der Schraubhülse (2) beaufschlagt ist, wobei der in die Schraubhülse (2) eingreifende Teil (8a) der Klemmeinrichtung (8) in Gebrauchsstellung an der Innenseite der Schraubhülse (2) in Drehrichtung formschlüssig angreift und die Schraubhülse (2) im Eingriffsbereich der Klemmeinrichtung (8) und diese Klemmeinrichtung (8) als gegenseitige Drehsicherung einen zusammenpassenden unrunden Querschnitt haben, **dadurch gekennzeichnet, dass** die Klemmeinrichtung (8) in ihrem unrunden Eingriffsbereich eine umlaufende Nut mit einem darin eingreifenden und radial überstehenden Haltering oder O-Ring (19) und die Schraubhülse (2) an ihrer der Überwurfmutter (3) zugewandten Öffnung eine Hinterschneidung (20) aufweist, die den Halte- oder O-Ring (19) in Gebrauchsstellung übergreift.

2. Kabelverschraubung nach Anspruch 1, **dadurch gekennzeichnet, dass** der in Drehrichtung wirkende Formschluss zwischen Klemmeinrichtung (8) und Schraubhülse (2) in axialer Richtung als Schiebe- oder Klemmsitz ausgebildet ist.

3. Kabelverschraubung nach einem der Ansprüche 1 bis 2, **dadurch gekennzeichnet, dass** der unrunde Querschnitt an der Schraubhülse (2) und an der Klemmeinrichtung (8) ein bereichsweise abgeflachter, im Übrigen kreisrunder, ein elliptischer oder ovaler oder ein profilierter oder ein mehrkantiger oder ein mit zu einer oder mehreren Gegennuten (11) passende Vorsprünge (12) aufweisender Querschnitt ist oder dass zwischen Schraubhülse (2) und Klemmeinrichtung (8) eine Nut- und Federverbindung vorgesehen ist.

4. Kabelverschraubung nach einem der Ansprüche 1 bis 3, **dadurch gekennzeichnet, dass** der unrunde Querschnitt zur in Drehrichtung formschlüssigen Kupplung der Schraubhülse (2) und der Klemmeinrichtung (8) ein Sechskant, Siebenkant, Achtkant oder Zehnkant ist.

5. Kabelverschraubung nach einem der Ansprüche 1 bis 4, **dadurch gekennzeichnet, dass** die in Gebrauchsstellung in der Schraubhülse (2) befindliche Stirnseite (9) der Klemmeinrichtung (8) einen in der Schraubhülse (2) angeordneten zweiten Klemmeinsatz (6) und/oder eine Dichtung (13) über eine Schrägfläche derart beaufschlagt, dass bei axialer Verstellung der Klemmeinrichtung (8) der zweite Klemmeinsatz (6) und/oder die Dichtung (13) an das Kabel, insbesondere an einen abisolierten Bereich des Kabels, andrückbar ist.

6. Kabelverschraubung nach einem der Ansprüche 1 bis 5, **dadurch gekennzeichnet, dass** die Klemmeinrichtung (8) zweiteilig ist und einen Klemmkörper (14) mit einem der Überwurfmutter (3) zugewandten Konusbereich und einen auf diesem Konusbereich axial verstellbaren Klemmring (15) aufweist, wobei in Gebrauchsstellung zwischen Konusbereich und Klemmring (15) Teile der Armierung (7), beispielsweise Armierungsdrähte oder eine Armierungsfolie, eingespannt oder eingeklemmt sind.

7. Kabelverschraubung nach einem der Ansprüche 1 bis 6, **dadurch gekennzeichnet, dass** die Überwurfmutter aufgeteilt ist und eine erste Überwurfmutter (3) zum Festlegen der Klemmeinrichtung (8) und die koaxial dazu angeordnete zweite Überwurfmutter (10) zum Beaufschlagen des ersten Klemmeinsatzes (5) und/oder einer Dichtung (16) dient, wobei die erste Überwurfmutter (3) ein Außengewinde (3a) und die zweite Überwurfmutter (10) ein dazu passendes Innengewinde hat.

8. Kabelverschraubung nach einem der Ansprüche 1 bis 7, **dadurch gekennzeichnet, dass** ein Vorsprung (17) der ersten oder einzigen Überwurfmutter (3) in Gebrauchsstellung die Klemmeinrichtung (8) in axialer Richtung im Sinne der Klemmwirkung, insbesondere den Klemmring (15), axial beaufschlagt.

9. Kabelverschraubung nach einem der Ansprüche 1 bis 8, **dadurch gekennzeichnet, dass** der Haltering oder O-Ring (19) ein elastischer Haltering oder O-Ring ist.

10. Kabelverschraubung nach einem der Ansprüche 1 bis 9, **dadurch gekennzeichnet, dass** die Hinterschneidung (20) den Haltering oder O-Ring (19) in Gebrauchsstellung mit axialem Abstand übergreift.

11. Kabelverschraubung nach einem der Ansprüche 1 bis 10, **dadurch gekennzeichnet, dass** die Hinterschneidung (20) den unrunden Einsteckbereich der Schraubhülse (2) in axialer Richtung begrenzt.

## Claims

1. Cable gland (1) comprising a screw sleeve (2) which can be inserted into a wall or a pipe coupling, comprising a union nut (3) which interacts with this screw sleeve (2), comprising a clamping insert (5, 6) which is acted on by the union nut (3) and can be pressed against a cable (4), which is to be retained, by tightening the union nut (3), wherein the cable (4) has a reinforcement (7), and a clamping device (8) for clamping a portion of the reinforcement (7) is provided in the cable gland (1), which clamping device (8) partially engages into the screw sleeve (2) in an axial direction in a usage position and is acted on by the union nut (3) outside the screw sleeve (2), wherein the portion (8a) of the clamping device (8) which engages into the screw sleeve (2) acts in a positive-locking manner in the direction of rotation on the inner face of the screw sleeve (2) in the usage position, and the screw sleeve (2) in the engagement region of the clamping device (8) and this clamping device (8) have, as a mutual rotation-prevention arrangement, a matching non-round cross section, **characterised in that** the clamping device (8) has, in the non-round engagement region thereof, a circumferential groove having a radially projecting retaining ring or O-ring (19), which engages in said circumferential groove, and the screw sleeve (2) has, at an opening thereof which faces the union nut (3), an undercut (20) which engages over the retaining ring or O-ring (19) in the usage position.

2. Cable gland as claimed in claim 1, **characterised in that** the positive-locking connection, which acts in the direction of rotation, between the clamping device (8) and the screw sleeve (2) is formed as a sliding or clamping fit in the axial direction.

3. Cable gland as claimed in any one of claims 1 to 2, **characterised in that** the non-round cross section is, at the screw sleeve (2) and at the clamping device (8), a cross section which is flattened in regions, but otherwise a circular cross section, an elliptical or oval cross section or a profiled cross section or a polygonal cross section or a cross section which has projections (12) which are matched to one or more mating grooves (11), or **in that** a tongue-and-groove connection is provided between the screw sleeve (2) and the clamping device (8).

4. Cable gland as claimed in any one of claims 1 to 3, **characterised in that** the non-round cross section for the coupling, which is positive-locking in the direction of rotation, of the screw sleeve (2) and of the clamping device (8) is a hexagon, a heptagon, an octagon or a decagon.

5. Cable gland as claimed in any one of claims 1 to 4, **characterised in that** the end face (9) of the clamping device (8) which is located in the screw sleeve (2) in the usage position acts on a second clamping insert (6) which is arranged in the screw sleeve (2) and/or a seal (13) by means of an oblique surface in such a way that, when the clamping device (8) is axially adjusted, the second clamping insert (6) and/or the seal (13) can be pressed against the cable, in particular against a stripped region of the cable.

6. Cable gland as claimed in any one of claims 1 to 5, **characterised in that** the clamping device (8) is in two parts and has a clamping body (14) with a conical region which faces the union nut (3) and has a clamping ring (15) which is axially adjustable on this conical region, wherein in the usage position between the conical region and the clamping ring (15), parts of the reinforcement means (7), e.g., reinforcement wires or a reinforcement film, are adapted to be fixed or clamped in.

7. Cable gland as claimed in any one of claims 1 to 6, **characterised in that** the union nut is divided and a first union nut (3) serves to secure the clamping device (8) and the second union nut (10), which is arranged coaxially to said first union nut, serves to act on the first clamping insert (5) and/or a seal (16), wherein the first union nut (3) has an external thread (3a), and the second union nut (10) has an internal thread which matches said external thread.

8. Cable gland as claimed in any one of claims 1 to 7, **characterised in that** a projection (17) from the first or only union nut (3) acts axially on the clamping device (8) in the axial direction in terms of producing a clamping effect, in particular on the clamping ring (15), in the usage position.

9. Cable gland as claimed in any one of claims 1 to 8, **characterised in that** the retaining ring or O-ring (9) is an elastic retaining ring or O-ring.

10. Cable gland as claimed in any one of claims 1 to 9, **characterised in that** the undercut (20) engages over the retaining ring or O-ring (19) with an axial spacing in the usage position.

11. Cable gland as claimed in any one of claims 1 to 10, **characterised in that** the undercut (20) delimits the non-round insertion region of the screw sleeve (2) in the axial direction.

## Revendications

1. Presse-étoupe (1) avec un manchon fileté (2) pouvant être inséré dans une paroi ou un raccord pour tuyaux, avec un écrou de raccord (3) interagissant avec le manchon fileté (2), avec un moyen de serrage (5, 6) sollicité par l'écrou de raccord (3) et pouvant être pressé contre un câble (4), qu'il s'agit de maintenir, en serrant l'écrou de raccord (3), le câble (4) présentant une armature (7) et un dispositif de serrage (8), destiné au serrage d'une partie de l'armature (7), étant prévu dans le presse-étoupe (1), lequel dispositif de serrage (8) s'emboîte en partie, dans le sens axial, en position d'utilisation, dans le manchon fileté (2) et est sollicité par l'écrou de raccord (3) à l'extérieur du manchon fileté (2), la partie (8a) du dispositif de serrage (8) qui s'emboîte dans le manchon fileté (2) touchant, en position d'utilisation, l'intérieur du manchon fileté (2) dans le sens de rotation par complémentarité de forme et le manchon fileté (2) dans la zone d'emboîtement du dispositif de serrage (8) et ce dispositif de serrage (8) ayant une section ovale adaptée servant de sécurité anti-rotation réciproque, **caractérisé en ce que** le dispositif de serrage (8) présente, dans sa zone d'emboîtement ovale, une rainure périphérique avec un joint de retenue ou un joint torique (19) s'emboîtant à l'intérieur et dépassant radialement, et le manchon fileté (2) présente, sur son ouverture dirigée vers l'écrou de raccord (3), une échancrure (20) qui recouvre le joint de retenue ou le joint torique (19) en position d'utilisation.

2. Presse-étoupe selon la revendication 1, **caractérisé en ce que** la complémentarité de forme, agissant dans le sens de rotation, entre le dispositif de serrage (8) et le manchon fileté (2) dans le sens axial est en forme de siège appuyé ou de serrage.

3. Presse-étoupe selon l'une quelconque des revendications 1 à 2, **caractérisé en ce que** la section ovale sur le manchon fileté (2) et le dispositif de serrage (8) est une section aplatie à certains endroits, par ailleurs circulaire, une section elliptique ou ovale ou une section profilée ou une section polygonale ou une section présentant des saillies (12) adaptées à une ou plusieurs contre-rainures (11) ou **en ce qu'**une liaison par rainure et ressort existe entre le manchon fileté (2) et le dispositif de serrage.

4. Presse-étoupe selon l'une quelconque des revendications 1 à 3, **caractérisé en ce que** la section ovale destinée à l'accouplement par complémentarité de forme dans le sens de la rotation du manchon fileté (2) et du dispositif de serrage (8) est un hexagone, un heptagone, une octogone ou un décagone.

5. Presse-étoupe selon l'une quelconque des revendications 1 à 4, **caractérisé en ce que** la face avant (9), se trouvant dans le manchon fileté (2) en position d'utilisation, du dispositif de serrage (8) sollicite un deuxième moyen de serrage (6), disposé dans le manchon fileté (2) et/ou un joint (13) sur une face oblique de telle sorte qu'en cas de déplacement axial du dispositif de serrage (8) le deuxième moyen de serrage (6) et/ou le joint (13) puisse(nt) être pressé(s) contre le câble, en particulier contre une zone dénudée du câble.

6. Presse-étoupe selon l'une quelconque des revendications 1 à 5, **caractérisé en ce que** le dispositif de serrage (8) est en deux parties et présente un corps de serrage (14) comportant une zone conique dirigée vers l'écrou de raccord (3), et une bague de serrage (15) déplaçable axialement sur cette zone conique, des parties de l'armature (7), par exemple des fils d'armure ou une feuille d'armure, étant serrés ou coincés entre la zone conique et la bague de serrage (15), en position d'utilisation.

7. Presse-étoupe selon l'une quelconque des revendications 1 à 6, **caractérisé en ce que** l'écrou de raccord est partagé et un premier écrou de raccord (3) sert à immobiliser le dispositif de serrage (8) et le deuxième écrou de serrage (8), disposé coaxialement, à solliciter le premier moyen de serrage (5) et/ou un joint (16), le premier écrou de raccord (3) ayant un filet extérieur (3a) et le deuxième écrou de raccord (10) un filet intérieur adapté à celui-ci.

8. Presse-étoupe selon l'une quelconque des revendications 1 à 7, **caractérisé en ce qu'**une saillie (17) du premier ou unique écrou de raccord (3) sollicite axialement le dispositif de serrage (8) dans le sens axial tel l'effet de serrage, en particulier la bague de serrage (15), en position d'utilisation.

9. Presse-étoupe selon l'une quelconque des revendications 1 à 8, **caractérisé en ce que** le joint de retenue ou le joint torique (19) est un joint de retenue ou un joint torique élastique.

10. Presse-étoupe selon l'une quelconque des revendications 1 à 9, **caractérisé en ce que** l'échancrure (20) recouvre le joint de retenue ou le joint torique (19) à une distance axiale en position d'utilisation.

11. Presse-étoupe selon l'une quelconque des revendications 1 à 10, **caractérisé en ce que** l'échancrure (20) délimite la zone d'insertion ovale du manchon fileté (2) dans le sens axial.
